Europäisches Patentamt

European Patent Office

Office européen des brevets

(19)

(11) Veröffentlichungsnummer : **0 098 404**
**B1**

(12) **EUROPÄISCHE PATENTSCHRIFT**

(45) Veröffentlichungstag der Patentschrift :
06.05.87

(21) Anmeldenummer : 83105690.8

(22) Anmeldetag : 10.06.83

(51) Int. Cl.⁴ : **F 24 J   2/46**

(54) **Befestigungselement an Spiegeln für Solar-Reflektoren.**

(30) Priorität : 08.07.82 DE 3225566

(43) Veröffentlichungstag der Anmeldung :
18.01.84 Patentblatt 84/03

(45) Bekanntmachung des Hinweises auf die Patenterteilung : 06.05.87 Patentblatt 87/19

(84) Benannte Vertragsstaaten :
BE DE FR GB IT

(56) Entgegenhaltungen :
EP-A- 0 081 061
WO-A-82 /014 21
DE-A- 2 734 142
DE-A- 2 802 885

(73) Patentinhaber : FLABEG GMBH
Siemensstrasse 3
D-8510 Fürth (DE)

(72) Erfinder : Seitz, Rudolf, Dipl.-Ing.
Kopernikus-Strasse 30
D-8500 Nürnberg 40 (DE)

(74) Vertreter : Tergau, Enno et al
Patentanwälte Tergau & Pohl Postfach 11 93 47
Hefnersplatz 3
D-8500 Nürnberg 11 (DE)

EP 0 098 404 B1

**Beschreibung**

Die Erfindung betrifft Spiegel für Solar-Reflektoren mit rückseitig aufgeklebtem Befestigungselement für die Verbindung mit einem Halte- und/oder Nachführgestänge.

Solar-Reflektoren gewinnen an Bedeutung. Sie werden in sonnenreichen Gegenden errichtet und konzentrieren die einfallenden Sonnenstrahlen mit Hilfe von Spiegeln auf einen Wärmeaustauscher, der meist auf einem Turm erhöht angebracht ist. Die Gesamtspiegelfläche derartiger Reflektoren beträgt zur Zeit etwa 20 bis einige tausend Quadratmeter, wobei die Reflektoren in Einzelspiegel unterteilt sind, deren Größe beispielsweise bei etwa 1 m² liegt. Die einzelnen Spiegel sind an Halte- und Nachführ-Gestängen befestigt, so daß es möglich ist, sie der wandernden Sonne entsprechend zu verstellen, so daß die reflektierten Sonnenstrahlen stets auf die gleiche Stelle, nämlich den erwähnten Wärmeaustauscher, treffen. Im Wärmeaustauscher wird ein Arbeitsmedium, beispielsweise Wasser, Öl oder Natrium auf erhöhte Temperatur erwärmt, wobei Temperaturen zwischen 200 und 800 °C erzielt werden. In aller Regel wird das Arbeitsmedium durch einen weiteren Wärmetauscher geleitet, wobei es die gespeicherte Wärme abgibt und überhitzten Dampf erzeugt, der zum Betrieb einer Turbine dient. Einrichtungen dieser Art sind beispielsweise in der DE-A-28 02 885 beschrieben. Auch in dieser Vorveröffentlichung ist herausgestellt, daß der Befestigungseinrichtung, welche die Reflektoren mit der Tragstruktur verbindet, große Bedeutung zukommt. Die Reflektoren müssen an der Tragstruktur so befestigt sein, daß ihre Verformung durch Windbelastung, Eigengewicht und Wärmespannungen möglichst gering bleibt. Um zu erreichen, daß die Verformungsbelastungen der Tragstruktur möglichst weitestgehend nicht auf die Reflektoren übertragen werden, wird in der Vorveröffentlichung vorgeschlagen, an der Rückseite eines jeden Reflektors wenigstens zwei voneinander unabhängige elastische Befestigungselemente anzubringen, die an definierten Stellen auf der Rückseite des Reflektors angeordnet sind. Die elastischen Verbindungselemente sollen dabei etwa auftretende Verformungskräfte der Tragstruktur aufnehmen, ohne dabei den Reflektor nennenswert zu belasten, also ohne die Kräfte auf den Reflektor zu übertragen. Bei einer in der Vorveröffentlichung geschilderten Ausführungsform besteht das Befestigungselement aus einer Platte, die unmittelbar mit dem Reflektor verbunden ist und einem daran befestigten elastischen Block aus Gummi oder Kunststoff, der mit der Tragstruktur oder einer Tragleiste der Tragstruktur verbunden ist. Über den Werkstoff, aus welchem die unmittelbar mit dem Reflektor verbundene Platte bestehen soll, sind in der Vorveröffentlichung keine Angaben gemacht. Aus tatsächlich gebauten Solar-Reflektoranlagen ist es jedoch bekannt, daß diese Platten aus kadmiertem Stahl oder auch aus verzinktem Stahl bestehen.

Beim Bau und Betrieb der Solar-Reflektoren ergeben sich weitere Probleme dadurch, daß die Spiegel im Verlaufe des Nach-Tag-Wechsels erheblichen Temperaturschwankungen unterworfen sind. Die Spiegel haben zwar die Aufgabe, die einfallende Sonnenenergie möglichst vollständig zu reflektieren ; es ist aber nicht vermeidbar, daß sich auch die Spiegel selbst aufheizen, beispielsweise durch die Umgebungstemperatur sowie die Sonnenenergie, welche vom Erdboden zurückgestrahlt wird. Bestehen nun die auf der Spiegelrückseite festgeklebten Befestigungselemente aus Stahl oder Leichtmetallegierungen, so sind die Wärmeausdehnungskoeffizienten dieser Metalle einerseits und des Spiegelglases andererseits sehr unterschiedlich, so daß sich Spannungen ergeben, die von der zwischengeschalteten Klebstoffschicht aufgefangen werden müssen. Damit die Klebstoffschicht hierzu in der Lage ist, werden solche Klebstoffe eingesetzt, die auch im ausgehärteten Zustand weitgehend dehnungselastisch bleiben. Die Klebkraft dieser Klebstoffe ist jedoch verhältnismäßig gering, was zur Folge hat, daß andererseits wieder die Kontaktfläche der Befestigungselemente zur Klebstoffschicht erheblich größer gewählt werden muß. Trotz dieser Maßnahmen kommt es immer wieder zum Abreißen einiger Befestigungselemente, was sofortige Reparaturen erforderlich macht.

Der Erfindung liegt die Aufgabe zugrunde, die bekannten Spiegel für Solar-Reflektoren mit rückwärtig aufgeklebten Befestigungselementen derart zu verbessern, daß Abreißerscheinungen vermieden und der Materialaufwand gleichzeitig verringert wird.

Zur Lösung dieser Aufgabe wird vorgeschlagen, daß die Befestigungselemente statt aus Stahl oder Metall aus keramischem Werkstoff bestehen, wobei der Werkstoff so gewählt wird, daß der lineare Ausdehnungskoeffizient $\alpha 600 = 1 \cdot 10^{-6}$ bis $15 \cdot 16^{-6}$ K$^{-1}$, vorzugsweise $4 \cdot 10^{-6}$ bis $12 \cdot 10^{-6}$ K$^{-1}$ beträgt. Als bevorzugte Ausführungsform derartiger Werkstoffe werden keramische Werkstoffe mit Glasphase, insbesondere Steatit-Keramik oder Hartporzellan genannt, oder Aluminiumoxid-Keramik mit und ohne Glasphase mit einem Gehalt von 50-100 Gew.% $Al_2O_3$.

Messungen haben ergeben, daß der durchschnittliche lineare Wärmeausdehnungskoeffizient von Spiegelglas $8,5 \cdot 10^{-6}$ K$^{-1}$ beträgt. Der lineare Wärmeausdehnungskoeffizient von Aluminium beträgt demgegenüber $23 \cdot 10^{-6}$ K$^{-1}$ und derjenige von rostfreiem Chromnickelstahl $16 \cdot 10^{-6}$ K$^{-1}$. Bei der üblichen Herstellung der Verbindungselemente aus Aluminium, Aluminiumlegierungen oder Chromnickelstählen sind die auf Wärmedehnung zurückzuführenden Spannungen zwischen den genannten Teilen vom Klebstoff aufzufangen, was zu den einleitend erwähnten Schwierigkeiten führt. Es wurde festgestellt, daß diese Schwierigkeiten durch die Auswahl der angegebenen Werkstoffe überwunden werden konnte, obgleich auch deren linearer Wärmeausdehnungskoeffizient nicht völlig mit denen des Spiegelglases übereinstimmt.

Die erwähnten guten Eigenschaften keramischer Werkstoffe, insbesondere der Werkstoffe mit Glasphase, in Bezug auf das Wärmeausdehnungsverhalten sind gekoppelt mit sehr guten Korrosionseigenschaften, die denen der metallischen Werkstoffe weit überlegen sind. Auch dies spielt eine erhebliche Rolle bei der Herstellung von Befestigungselementen für Spiegel, da diese Elemente während ihrer gesamten Lebensdauer der freien Atmosphäre ausgesetzt sind. Im Laufe des Nacht-Tag-Rythmusses werden die Elemente nicht nur auf unterschiedliche Temperaturen erwärmt, sondern sie werden auch mit wasserhaltigen Kondensaten überzogen, was bei metallischen Befestigungselementen auch dann zu Korrosionen, nämlich Spaltkorrosionen führen kann, wenn es sich um rostbeständige Chrom-Nickel-Stähle handelt. Hinzu kommt, daß weitere Untersuchungen gezeigt haben, daß auch die Festigkeitseigenschaften und zwar sowohl die Druck- wie auch die Zugfestigkeiten der genannten keramischen Werkstoffe völlig ausreichen, um die Gewichte der hier in Betracht kommenden Spiegel mit Sicherheit aufzunehmen.

Unter den bevorzugt einzusetzenden keramischen Werkstoffen mit Glasphase werden wiederum die Steatit-Keramik und das Hartporzellan hervorgehoben.

Keramische Werkstoffe mit Glasphase sind an sich bekannt. Sie sind beispielsweise in dem Buch von Salmang/Scholze « Die physikalischen und chemischen Grundlagen der Keramik », 5. Aufl., 1968, Seite 278 ff beschrieben. Es handelt sich um inhomogen aufgebaute keramische Werkstoffe, bei denen kristallisierte Bestandteile, wie beispielsweise Quarz, Tonerde, Protoenstatit und ähnliche Gefügebestandteile neben nicht-kristallisierten, also glasigen Stoffen vorhanden sind. Die kristallisierten Bestandteile sind dabei in aller Regel als offene, also nicht zusammenhängende phase in die glasige geschlossene, also zusammenhängende Phase eingebettet. Der erwähnte Aufbau bringt es mit sich, daß diese Stoffe bei erheblich gesteigerter Festigkeit ein thermisches Ausdehnungsverhalten zeigen, das dem des Glases weitgehend, wenn auch nicht völlig entspricht. Die Angleichung der linearen Wärmeausdehnungskoeffizienten beider Werkstoffgruppen ist jedenfalls hinreichend, um auch bei Verwendung von stark aushärtenden Klebstoffen zu dauerhaften Klebeverbindungen zu führen.

Tabelle 1

| Werkstoff | $\alpha\,\frac{20}{600}$ in $10^{-6}\,\mathrm{K}^{-1}$ |
|---|---|
| Quarzporzellan | 4 ... 6 |
| Tonerdeporzellan | 4 ... 5 |
| Steatit | 8 ... 9 |
| Forsterit | 10 .. 11 |
| Cordierit (dicht) | 2 ... 3 |
| Werkst. mit 50-80% $Al_2O_3$ | 6 ... 8 |
| "     "   80-90% $Al_2O_3$ | 7 ... 8 |
| Aluminiumoxid-Keramik mit mehr als 99% $Al_2O_3$ | 7 ... 8 |
| Zirkonoxid-Keramik | 11 .. 13 |

Zur Herstellung der vorgeschlagenen Befestigungselemente dient vorzugsweise Steatit-Keramik, meist auch einfach « Steatit » genannt. Bei dem Mineral gleichen Namens « Steatit » handelt es sich um den sogenannten Speckstein, eine dichte und sehr feinkristalline Form des Talkes mit der Zusammensetzung $3MgO \cdot 4SiO_2 \cdot H_2O$. In der Keramik versteht man jedoch unter der Bezeichnung « Steatit » Werkstoffe, die Speckstein als hauptsächliche Massekomponente enthalten oder deren Scherben analog aufgebaut ist, wenn man von anderen Rohstoffen ausgeht. Um Mißverständnisse zu vermeiden, wird im vorliegenden Zusammenhang von Steatit-Keramik gesprochen.

Die Erfindung wird im Folgenden anhand der beigefügten Zeichnung näher erläutert. Es stellen dar :

Figur 1   eine perspektivische Ansicht eines Solar-Reflektors von der Rückseite aus gesehen.

Figur 2   ein schematischer Querschnitt durch den Aufbau eines Spiegels nach Linie II-II in Fig. 1 mit rückseitig aufgeklebtem Befestigungselement.

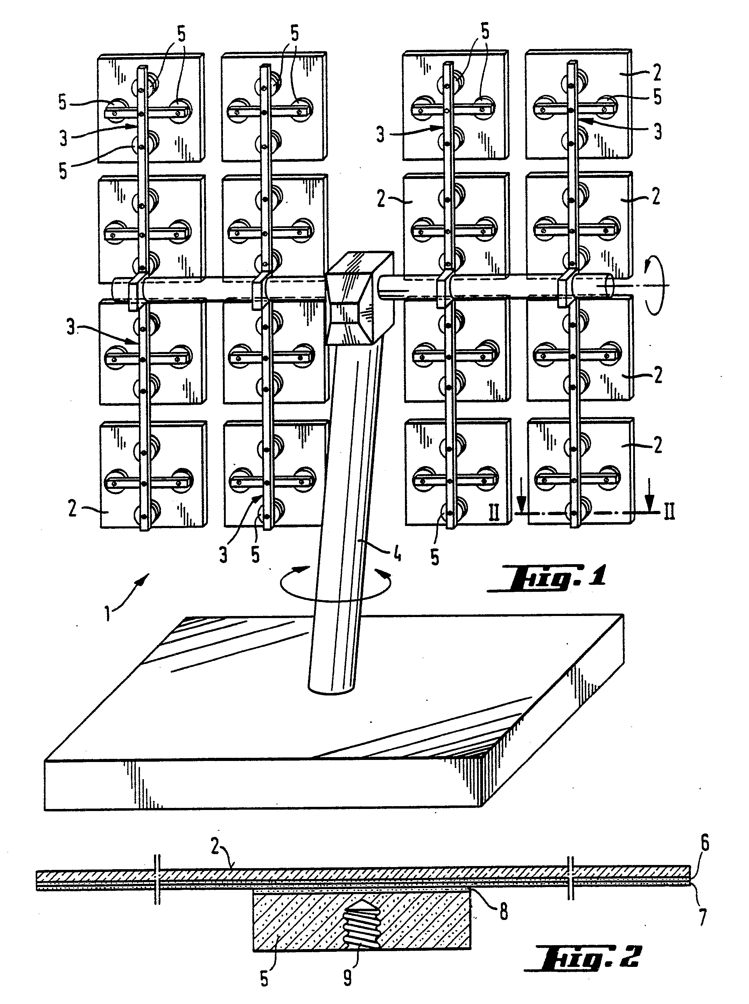

Der in Fig. 1 dargestellte Solar-Reflektor ist als Ganzes mit 1 bezeichnet. Er besteht aus mehreren, im dargestellten Beispiel sechzehn Einzelspiegeln 2, welche jeweils eine Größe von etwa einem Quadratmeter haben und welche mit Hilfe eines Gestänges 3 am Ständer 4 einer Nachführvorrichtung befestigt sind. Die Nachführvorrichtung wird im allgemeinen mit Hilfe von Mikroprozessoren gesteuert, welche die Position der Spiegel in sehr kurzen Abständen (beispielsweise je Sekunde einmal) neu berechnen und die Spiegel dann mit Hilfe von nicht dargestellten Stellmotoren gegebenenfalls nachstellen.

Das Gestänge 3 ist je Spiegel im allgemeinen mit vier Befestigungselementen 5 verbunden, beispielsweise verschraubt. Die Befestigungselemente selbst sind runde oder auch rechteckig geformte Scheiben, deren Dicke je nach Ausführungsart zwischen einigen Millimetern bis wenigen Zentimetern

**0 098 404**

beträgt. Die Befestigungselemente sind mit Hilfe von Klebstoffen auf der Spiegelrückseite festgeklebt. Diese Spiegelrückseite ist im allgemeinen lackiert, falls es sich nicht um Spiegelformen handelt, bei denen die Rückseite ebenfalls aus Glas besteht.

In Fig. 2 ist eine derartige Klebeverbindung im Querschnitt dargestellt. Der Spiegel 2 ist auf der Rückseite mit einer Spiegelschicht 6, meist einer Sandwich-Schicht aus Silber und Kupfer belegt. Die Spiegelschicht 6 ist auf ihrer Rückseite mit einer Schutzlackschicht 7 abgedeckt, welche meist ebenfalls aus mehreren unterschiedlich zusammengesetzten Schichten besteht. Auf der äußeren Schutzlackschicht ist alsdann eine Klebstoffschicht angeordnet, die mit ihrer Rückseite am Befestigungselement 5 haftet.

Das Befestigungselement 5 soll erfindungsgemäß aus einem keramischen Werkstoff vorzugsweise mit Glasphase, etwa aus Steatit-Keramik oder Hartporzellan bestehen. In Ausnützung der dadurch bedingten Vorteile wird vorgeschlagen, daß zwischen der Rückseite des Spiegels 2 und dem Befestigungselement 5 eine Schicht 8 aus einem unelastisch aushärtendem Kunststoff angeordnet ist. Klebstoffe dieser Art sind beispielsweise Zweikomponentenkleber auf Epoxidbasis oder ähnliche bekannte Stoffe.

Des weiteren wird vorgeschlagen, daß in dem Befestigungselement 5 eine wenigstens einseitig offene Durchbrechung 9 zum Einsetzen einer Schraube angeordnet ist. Bei dieser Durchbrechung kann es sich um eine bei der Herstellung eingeformte Gewindebohrung handeln, in welche die Schraube von rückwärts eingeschraubt wird. Es kann sich aber auch um ein durchgehendes Loch handeln, das vorzugsweise zur Klebeseite hin erweitert ist und in welches dann die Schrauben eingesetzt werden können, wobei die Locherweiterung den Schraubenkopf aufnimmt. Durchgeführte Versuche haben gezeigt, daß die Bruchfestigkeit der erwähnten keramischen Werkstoffe völlig ausreicht, um die hier auftretenden, nicht unerheblichen Kräfte aufzufangen.

Positionszahlenliste

1 Solar-Reflektor
2 Spiegel
3 Gestänge
4 Ständer
5 Befestigungselement
6 Spiegelschicht
7 Schutzlackschicht
8 Klebstoffschicht
9 Durchbrechung

**Patentansprüche**

1. Spiegel für Solar-Reflektoren mit rückseitig aufgeklebtem Befestigungselement (5) für die Verbindung mit einem Halte- oder Nachführ-Gestänge, dadurch gekennzeichnet, daß das Befestigungselement (5) aus keramischem Werkstoff besteht, dessen linearer Ausdehnungskoeffizient $\alpha_{600}^{20} = 1 \cdot 10^{-6}$ bis $15 \cdot 10^{-6}$ K$^{-1}$, vorzugsweise $4 \cdot 10^{-6}$ bis $12 \cdot 10^{-6}$ K$^{-1}$ beträgt.

2. Spiegel nach Anspruch 1, dadurch gekennzeichnet, daß das Befestigungselement (5) aus einem keramischen Werkstoff mit Glasphase besteht.

3. Spiegel nach Anspruch 2, dadurch gekennzeichnet, daß das Befestigungselement (5) aus Steatit-Keramik besteht.

4. Spiegel nach Anspruch 2, dadurch gekennzeichnet, daß das Befestigungselement (5) aus Hartporzellan besteht.

5. Spiegel nach Anspruch 1, dadurch gekennzeichnet, daß das Befestigungselement (5) aus Aluminiumoxid-Keramik mit 50-100 % $Al_2O_3$ besteht.

6. Spiegel nach einem der Ansprüche 1-5, dadurch gekennzeichnet, daß zwischen der Rückseite des Spiegels (2) und dem Befestigungselement (5) eine Schicht (8) aus einem praktisch unelastisch aushärtenden Klebstoff angeordnet ist.

**Claims**

1. Mirror for solar reflectors having a securing element (5), cemented on the rear surface, for connection to a retaining or tracking linkage, characterized in that the securing element (5) consists of ceramic material, the coefficient of linear expansion $\alpha_{600}^{20}$ of which is $1 \cdot 10^{-6}$ to $15 \cdot 10^{-6}$ K$^{-1}$, preferably $4 \cdot 10^{-6}$ to $12 \cdot 10^{-6}$ K$^{-1}$.

2. Mirror according to claim 1, characterized in that the securing element (5) consists of a ceramic material with a glass phase.

3. Mirror according to claim 2, characterized in that the securing element (5) consists of steatite ceramic.

4. Mirror according to claim 2, characterized in that the securing element (5) consists of hard porcelain.

5. Mirror according to claim 1, characterized in that the securing element (5) consists of aluminium oxide ceramic containing 50-100 % $Al_2O_3$.

6. Mirror according to one of claims 1 to 5, characterized in that a layer (8) of a practically inelastically setting adhesive is disposed between the rear surface of the mirror (2) and the securing element (5).

**Revendications**

1. Miroir pour réflecteurs solaires avec élément de fixation (5) collé sur la face arrière pour la liaison avec une tringlerie de maintien ou de poursuite, caractérisé en ce que l'élément de fixation (5) est constitué d'un matériau céramique dont le coefficient de dilation linéaire $\alpha_{600}$ se monte à $1 \cdot 10^{-6}$ à $15 \cdot 10^{-6}$ $K^{-1}$, de préférence $4 \cdot 10^{-6}$ à $12 \cdot 10^{-6}$ $K^{-1}$.

2. Miroir selon la revendication 1, caractérisé en ce que l'élément de fixation (5) est constitué d'un matériau céramique à phase vitreuse.

3. Miroir selon la revendication 2, caractérisé en ce que l'élément de fixation (5) est constitué de céramique stéatite.

4. Miroir selon la revendication 2, caractérisé en ce que l'élément de fixation (5) est constitué de porcelaine dure.

5. Miroir selon la revendication 1, caractérisé en ce que l'élément de fixation (5) est constitué de céramique à base d'oxyde d'aluminium à 50-100 % $Al_2O_3$.

6. Miroir selon l'une des revendications 1-5, caractérisé en ce qu'entre la face arrière du miroir (2) et l'élément de fixation (5) est prévue une couche (8) d'une colle qui durcit en étant pratiquement non élastique.

**Fig. 1**

**Fig. 2**